# EUROPEAN PATENT SPECIFICATION

(11) **EP 2 820 881 B1**
(45) Date of publication and mention of the grant of the patent: **17.03.2021**
(21) Application number: 13754862.4
(22) Date of filing: 26.02.2013
(51) Int. Cl.: H04L 1/00, H04L 1/16, H04L 1/18, H04W 72/04, H04L 5/00, H04W 28/00

(54) **METHOD AND SYSTEM FOR EARLY TERMINATION OF TRANSMISSIONS IN RESPONSE TO ACK OF EARLY DECODING**
VERFAHREN UND SYSTEM ZUR FRÜHEN TERMINIERUNG VON ÜBERTRAGUNGEN IN ABHÄNGIGKEIT VON DER QUITTIERUNG EINER FRÜHEN DECODIERUNG
PROCÉDÉ ET SYSTÈME POUR LA CESSATION ANTICIPÉE DES ÉMISSIONS EN RÉPONSE À UN ACCUSÉ DE RÉCEPTION DE DÉCODAGE ANTICIPÉ

(30) Priority: 27.02.2012 WO PCT/CN2012/071676; 27.02.2012 WO PCT/CN2012/071665
(43) Date of publication of application: 07.01.2015
(73) Proprietor: Qualcomm Incorporated, San Diego, CA 92121-1714 (US)
(72) Inventor: SAMBHWANI, Sharad Deepak, San Diego, California 92121-1714 (US); AKKARAKARAN, Sony John, San Diego, California 92121-1714 (US); LIANG, Jiye, San Diego, California 92121-1714 (US); HUANG, Yin, San Diego, California 92121-1714 (US)
(74) Representative: Dunlop, Hugh Christopher
(86) International application number: PCT/CN2013/071883
(87) International publication number: WO 2013/127322

(56) References cited:
- WO-A1-2010/115311
- WO-A1-2011/063568
- WO-A1-2011/063569
- CN-A- 1 711 713
- US-A1- 2009 304 024

## Description

### BACKGROUND

### Field

The present disclosure relates generally to communication systems, and more particularly, to a method, a computer program product, and an apparatus that include an acknowledgement of early decoding of a packet transmission. The invention addresses a transmitting method according to claim 1, a transmitting apparatus according to claim 6, a receiving method according to claim 7, a receiving apparatus according to claim 12 and a computer program product according to claim 13.

### Background

Wireless communication networks are widely deployed to provide various communication services such as telephony, video, data, messaging, broadcasts, and so on. Such networks, which are usually multiple access networks, support communications for multiple users by sharing the available network resources. One example of such a network is the UMTS Terrestrial Radio Access Network (UTRAN). The UTRAN is the radio access network (RAN) defined as a part of the Universal Mobile Telecommunications System (UMTS), a third generation (3G) mobile phone technology supported by the 3rd Generation Partnership Project (3GPP). The UMTS, which is the successor to Global System for Mobile Communications (GSM) technologies, currently supports various air interface standards, such as Wideband-Code Division Multiple Access (W-CDMA), Time Division-Code Division Multiple Access (TD-CDMA), and Time Division-Synchronous Code Division Multiple Access (TD-SCDMA). The UMTS also supports enhanced 3G data communications protocols, such as High Speed Packet Access (HSPA), which provides higher data transfer speeds and capacity to associated UMTS networks.

As the demand for mobile broadband access continues to increase, research and development continue to advance the UMTS technologies not only to meet the growing demand for mobile broadband access, but to advance and enhance the user experience with mobile communications. WO 2011/063568A1 relates to techniques for reducing transmission power and improving the capacity of wireless digital communication systems.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

Substantial system capacity gains and receiver power consumption reductions can be made possible through the use of early decoding. For example, system capacity gains can be possible when a transmitter is able to stop a packet transmission as soon as it is made aware that the receiver has succeeded in decoding the packet early. Receiver power consumption savings can also be possible because appropriate receiver subsystems can be powered down from the time of successful early decoding until the end of the packet duration. The packets may comprise CS voice packets having a fixed transmission time interval (TTI). R99 packets that are transmitted over time durations, e.g., TTI, of 10ms, 20ms, 40ms or 80ms may be decodable by the receiver prior to reception of the entire packet. Once decoded, an Ack can be sent in order to notify the device transmitting the R99 packet to cease transmission, thereby providing a reduction in transmission power requirements and system capacity gains. Thus, once an indication of early decoding is received, the appropriate transmission or reception components can be powered down until the end of the TTI.

Transmissions on both uplink and downlink include both control and data packets. Control information on one link could impact the transmission and performance of the other link. Therefore, appropriate control logic is required in order to determine which transmissions can be stopped and at what time relative to the end of the packet, so as to maximize the power savings and capacity gains from early termination while minimizing unwanted side-effects.

Aspects presented herein provide the ability for both UE and Node B transceivers to achieve the power savings and capacity gains of early termination without incurring performance degradations.

In an aspect of the disclosure, a method, a computer program product, and an apparatus are provided. The apparatus begins to transmit a packet, e.g., a data packet, and transmits control information. Upon receiving an acknowledgement (Ack) of early decoding of the packet transmission prior to transmission of the entire packet, the apparatus ceases transmission of the packet. The apparatus continues to transmit at least a portion of the control information. The apparatus may, however, cease a portion of the control information that is only required to enable decoding of the packet. The portion of control information that is transmitted after the Ack of early decoding is received may be transmitted at a reduced rate.

Once the apparatus transmits a second Ack, e.g., regarding reception of a packet received during a same time interval, the apparatus ceases transmission of the entire control information. The second Ack is transmitted by the apparatus rather than being received by the apparatus. The second Ack may refer to a packet that the transmitting apparatus was receiving during the same period that it was beginning to transmit the initial packet.

The packet may be, e.g., a data packet transmitted on an uplink dedicated physical data channel (DPDCH). The control information may be transmitted on an uplink dedicated physical control channel (DPCCH). The control information may comprise at least one of a pilot, a transmitting power control (TPC), and a transport format combination indicator (TFCI).

In another aspect of the disclosure, a method, a computer program product, and an apparatus are provided. The apparatus begins to receive a packet transmission and control information. The apparatus attempts to early decode the packet prior to reception of the entire packet. Once early decoding is accomplished, the apparatus transmits an Ack of early decoding and powers down a decoding module until an end of the packet. The apparatus continues to monitor at least a portion of control information even after early decoding the packet. Upon receiving a second Ack from a device that transmitted the packet, the apparatus ceases to monitor the control information. The apparatus may also power down a control information processing module.

To the accomplishment of the foregoing and related ends, the one or more aspects comprise the features hereinafter fully described and particularly pointed out in the claims. The following description and the annexed drawings set forth in detail certain illustrative features of the one or more aspects.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
FIG. 1 is a diagram illustrating an example of a hardware implementation for an apparatus employing a processing system.
FIG. 2 is a block diagram conceptually illustrating an example of a telecommunications system.
FIG. 3 is a conceptual diagram illustrating an example of an access network.
FIG. 4 is a block diagram conceptually illustrating an example of a Node B in communication with a UE in a telecommunications system.
FIG. 5 is a flow chart of a method of wireless communication.
FIG. 6 is a flow chart of a method of wireless communication.
FIG. 7 is a conceptual data flow diagram illustrating the data flow between different modules/means/components in an exemplary apparatus.
FIG. 8 is a conceptual data flow diagram illustrating the data flow between different modules/means/components in an exemplary apparatus.
FIG. 9 is a diagram illustrating an example of a hardware implementation for an apparatus employing a processing system

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

As used in this application, the terms "component," "module," "system" and the like are intended to include a computer-related entity, such as but not limited to hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

Furthermore, various aspects are described herein in connection with a terminal, which can be a wired terminal or a wireless terminal. A terminal can also be called a system, device, subscriber unit, subscriber station, mobile station, mobile, mobile device, remote station, remote terminal, access terminal, user terminal, terminal, communication device, user agent, user device, or user equipment (UE). A wireless terminal may be a cellular telephone, a satellite phone, a cordless telephone, a Session Initiation Protocol (SIP) phone, a wireless local loop (WLL) station, a personal digital assistant (PDA), a handheld device having wireless connection capability, a computing device, or other processing devices connected to a wireless modem. Moreover, various aspects are described herein in connection with a base station. A base station may be utilized for communicating with wireless terminal(s) and may also be referred to as an access point, a Node B, or some other terminology.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

The techniques described herein may be used for various wireless communication systems such as CDMA, TDMA, FDMA, OFDMA, SC-FDMA and other systems. The terms "system" and "network" are often used interchangeably. A CDMA system may implement a radio technology such as Universal Terrestrial Radio Access (UTRA), cdma2000, etc. UTRA includes Wideband-CDMA (W-CDMA) and other variants of CDMA. Further, cdma2000 covers IS-2000, IS-95 and IS-856 standards. A TDMA system may implement a radio technology such as Global System for Mobile Communications (GSM). An OFDMA system may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM , etc. UTRA and E-UTRA are part of Universal Mobile Telecommunication System (UMTS). 3GPP Long Term Evolution (LTE) is a release of UMTS that uses E-UTRA, which employs OFDMA on the DL and SC-FDMA on the UL. UTRA, E-UTRA, UMTS, LTE and GSM are described in documents from an organization named "3rd Generation Partnership Project" (3GPP). Additionally, cdma2000 and UMB are described in documents from an organization named "3rd Generation Partnership Project 2" (3GPP2). Further, such wireless communication systems may additionally include peer-to-peer (*e.g.,* mobile-to-mobile) *ad hoc* network systems often using unpaired unlicensed spectrums, 802.xx wireless LAN, BLUETOOTH and any other short- or long- range, wireless communication techniques.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches may also be used.

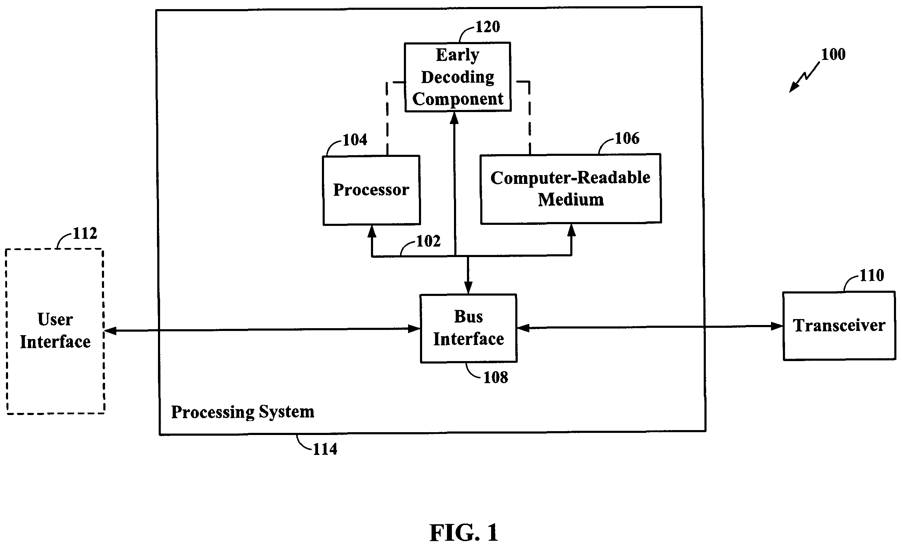

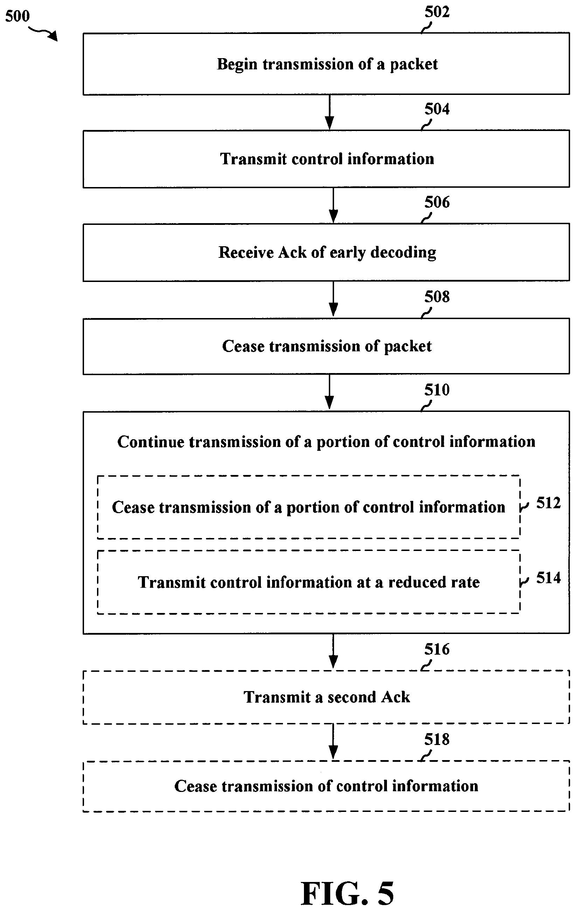

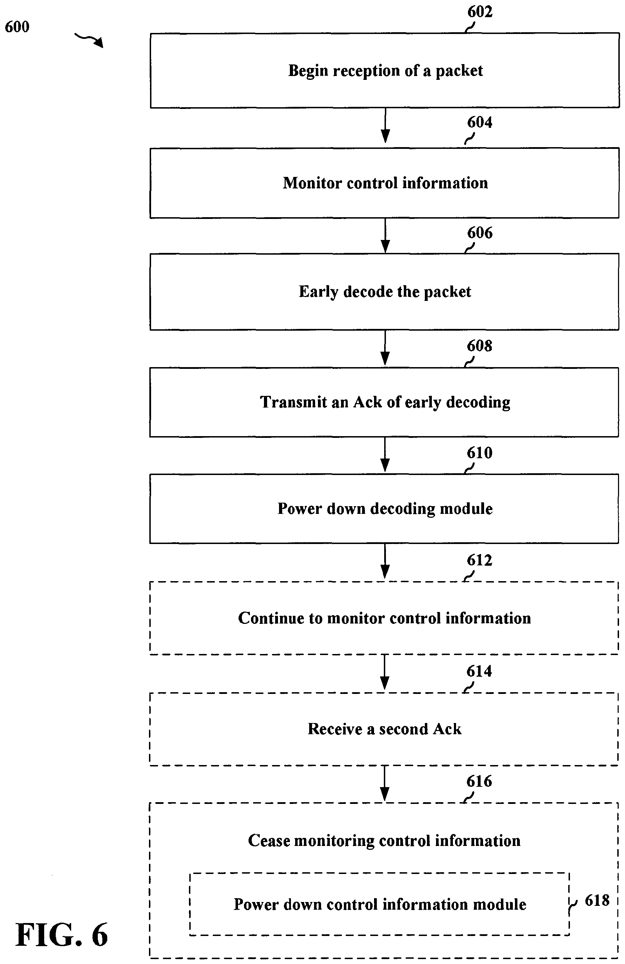

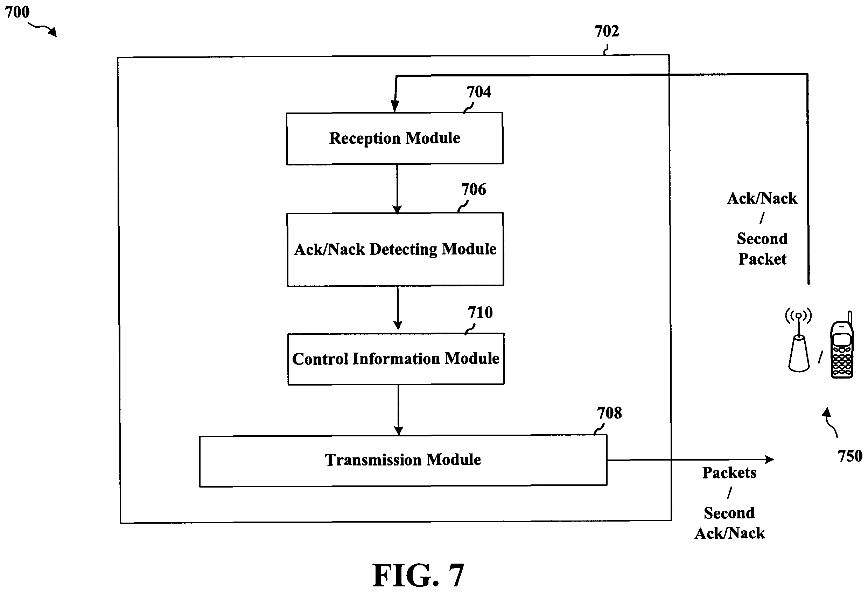

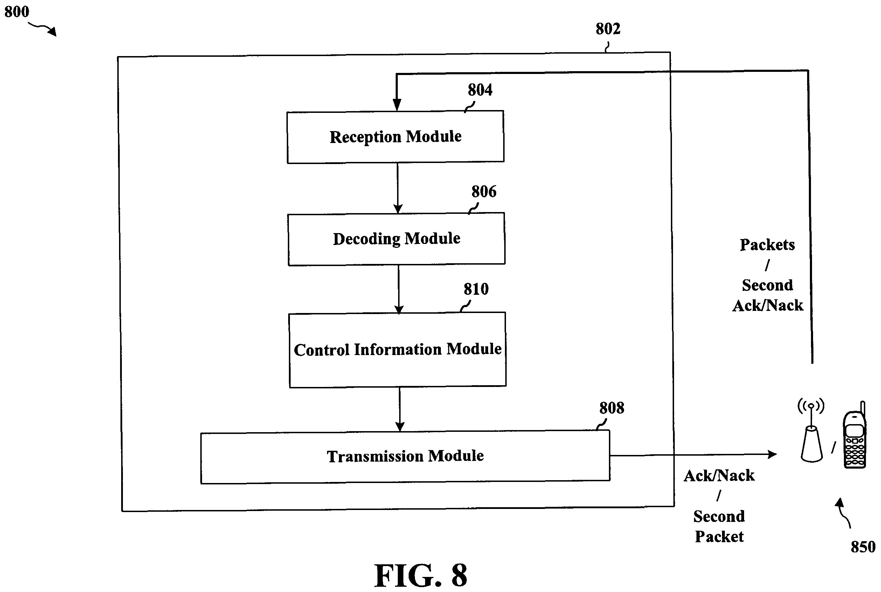

FIG. 1 is a conceptual diagram illustrating an example of a hardware implementation for an apparatus 100 employing a processing system 114. The processing system may further include an early decoding component 120 that is configured to transmit and receive Acks of early decoding. For example, the early decoding component may include Ack reception functions similar to those described in connection with FIG. 5 and 7 and/or Ack transmission functions similar to those described in connection with FIGs. 6 and 8. In some aspects, early decoding component 120 may be a stand-alone component within processing system 114, or may be defined by one or more processing modules within processor 104, or by executable code or instructions stored as computer-readable medium 106 and executable by processor 104, or some combination thereof.

For example, aspects of the Ack transmission function of the early decoding component 120 may transmit an Ack, e.g., of early decoding. Upon beginning to receive a packet transmission and control information, an attempt is made to early decode the packet. Once the packet is decoded early, i.e., prior to reception of the entire packet, an Ack of early decoding is transmitted. The decoding module can be powered down after the Ack is transmitted, however, at least a portion of the control information may continue to be monitored. Upon the receipt of a second Ack regarding a second packet, e.g., monitoring of the residual control information may be ceased. A control information module can also be powered down at this time.

Aspects of the Ack reception function of the early decoding component 120 may receive an Ack, e.g., of early decoding, after beginning a transmission of a packet. Upon receiving the Ack of early decoding, transmission of the packet may be ceased, while at least a portion of control information continues to be transmitted. A portion of control information that can cease to be transmitted upon receipt of the Ack of early decoding may include the portion that is only required to enable decoding of the packet. Transmission of the entire control information may be ceased, e.g., once its use ends. For example, once the apparatus transmits a second Ack regarding early decoding of a second packet that was being received during transmission of the first packet, transmission of the residual control information may be ceased.

The packet may be a data packet transmitted on an uplink DPDCH, and the control information may be transmitted on an uplink DPCCH. The control information may comprise at least one of a pilot, TPC, and TFCI.

In this example, the processing system 114 may be implemented with a bus architecture, represented generally by the bus 102. The bus 102 may include any number of interconnecting buses and bridges depending on the specific application of the processing system 114 and the overall design constraints. The bus 102 links together various circuits including one or more processors, represented generally by the processor 104, computer-readable media, represented generally by the computer-readable medium 106, and in some aspects, early decoding component 120. The bus 102 may also link various other circuits such as timing sources, peripherals, voltage regulators, and power management circuits, which are well known in the art, and therefore, will not be described any further. A bus interface 108 provides an interface between the bus 102 and a transceiver 110. The transceiver 110 provides a means for communicating with various other apparatus over a transmission medium. Depending upon the nature of the apparatus, a user interface 112 (e.g., keypad, display, speaker, microphone, joystick) may also be provided.

The processor 104 is responsible for managing the bus 102 and general processing, including the execution of software stored on the computer-readable medium 106. The software, when executed by the processor 104, causes the processing system 114 to perform the various functions described infra for any particular apparatus. The computer-readable medium 106 may also be used for storing data that is manipulated by the processor 104 when executing software.

The various concepts presented throughout this disclosure may be implemented across a broad variety of telecommunication systems, network architectures, and communication standards.

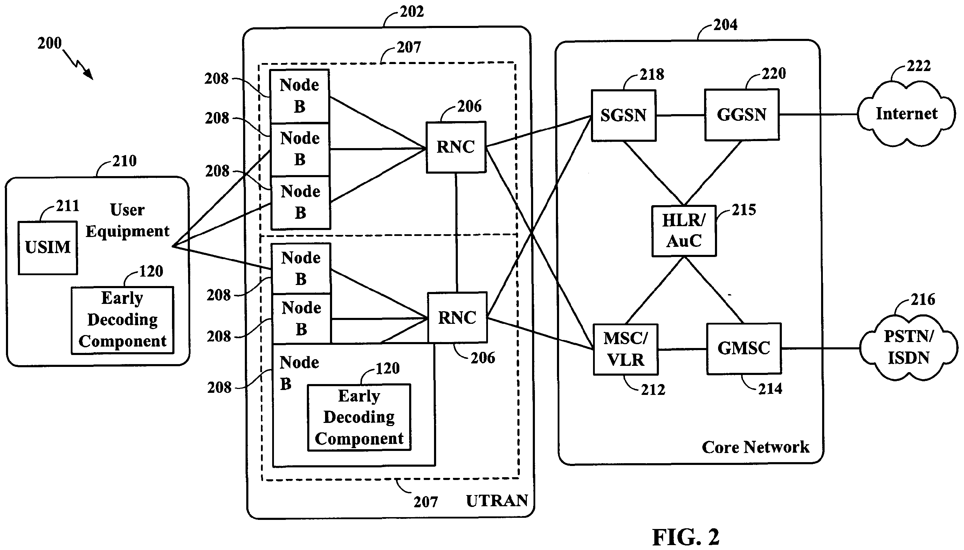

Referring to FIG. 2, by way of example and without limitation, the aspects of early decoding component 120 disclosed herein may be implemented by a user equipment (UE) 210 and/or a Node B 208 operating in a UMTS system 200 employing a W-CDMA air interface. A UMTS network includes three interacting domains: a Core Network (CN) 204, a UMTS Terrestrial Radio Access Network (UTRAN) 202, and UE 210. In this example, the UTRAN 202 provides various wireless services including telephony, video, data, messaging, broadcasts, and/or other services. The UTRAN 202 may include a plurality of Radio Network Subsystems (RNSs) such as an RNS 207, each controlled by a respective Radio Network Controller (RNC) such as an RNC 206. Here, the UTRAN 202 may include any number of RNCs 206 and RNSs 207 in addition to the RNCs 206 and RNSs 207 illustrated herein. The RNC 206 is an apparatus responsible for, among other things, assigning, reconfiguring and releasing radio resources within the RNS 207. The RNC 206 may be interconnected to other RNCs (not shown) in the UTRAN 202 through various types of interfaces such as a direct physical connection, a virtual network, or the like, using any suitable transport network.

Communication between a UE 210, e.g., which may be UE 1130 in FIG. 1, and a Node B 208 may be considered as including a physical (PHY) layer and a medium access control (MAC) layer. Further, communication between a UE 210 and an RNC 206 by way of a respective Node B 208 may be considered as including a radio resource control (RRC) layer. In the instant specification, the PHY layer may be considered layer 1; the MAC layer may be considered layer 2; and the RRC layer may be considered layer 3. Information hereinbelow utilizes terminology introduced in Radio Resource Control (RRC) Protocol Specification, 3GPP TS 25.331 v9.1.0. As noted above, the UE 210 may include an early decoding component 120, as described in connection with FIG. 1.

The geographic region covered by the SRNS 207 may be divided into a number of cells, with a radio transceiver apparatus serving each cell. A radio transceiver apparatus is commonly referred to as a Node B in UMTS applications, but may also be referred to by those skilled in the art as a base station (BS), a base transceiver station (BTS), a radio base station, a radio transceiver, a transceiver function, a basic service set (BSS), an extended service set (ESS), an access point (AP), or some other suitable terminology. For clarity, three Node Bs 208 are shown in each SRNS 207; however, the SRNSs 207 may include any number of wireless Node Bs. The Node Bs 208 provide wireless access points to a core network (CN) 204 for any number of UEs. Although only one Node B 208 is illustrated as having early decoding component 120, as described in connection with FIG. 1, each of the Node Bs 208 may include such a component. Examples of a mobile apparatus include a cellular phone, a smart phone, a session initiation protocol (SIP) phone, a laptop, a notebook, a netbook, a smartbook, a personal digital assistant (PDA), a satellite radio, a global positioning system (GPS) device, a multimedia device, a video device, a digital audio player (e.g., MP3 player), a camera, a game console, or any other similar functioning device. The mobile apparatus is commonly referred to as user equipment (UE) in UMTS applications, but may also be referred to by those skilled in the art as a mobile station (MS), a subscriber station, a mobile unit, a subscriber unit, a wireless unit, a remote unit, a mobile device, a wireless device, a wireless communications device, a remote device, a mobile subscriber station, an access terminal (AT), a mobile terminal, a wireless terminal, a remote terminal, a handset, a terminal, a user agent, a mobile client, a client, or some other suitable terminology. In a UMTS system, the UE 210 may further include a universal subscriber identity module (USIM) 211, which contains a user's subscription information to a network. For illustrative purposes, one UE 210 is shown in communication with a number of the Node Bs 208. The DL, also called the forward link, refers to the communication link from a Node B 208 to a UE 210, and the UL, also called the reverse link, refers to the communication link from a UE 210 to a Node B 208.

The core network 204 interfaces with one or more access networks, such as the UTRAN 202. As shown, the core network 204 is a GSM core network. However, as those skilled in the art will recognize, the various concepts presented throughout this disclosure may be implemented in a RAN, or other suitable access network, to provide UEs with access to types of core networks other than GSM networks.

The core network 204 includes a circuit-switched (CS) domain and a packet-switched (PS) domain. Some of the circuit-switched elements are a Mobile services Switching Centre (MSC), a Visitor location register (VLR) and a Gateway MSC. Packet-switched elements include a Serving GPRS Support Node (SGSN) and a Gateway GPRS Support Node (GGSN). Some network elements, like EIR, HLR, VLR and AuC may be shared by both of the circuit-switched and packet-switched domains. In the illustrated example, the core network 204 supports circuit-switched services with a MSC 212 and a GMSC 214. In some applications, the GMSC 214 may be referred to as a media gateway (MGW). One or more RNCs, such as the RNC 206, may be connected to the MSC 212. The MSC 212 is an apparatus that controls call setup, call routing, and UE mobility functions. The MSC 212 also includes a visitor location register (VLR) that contains subscriber-related information for the duration that a UE is in the coverage area of the MSC 212. The GMSC 214 provides a gateway through the MSC 212 for the UE to access a circuit-switched network 216. The core network 204 includes a home location register (HLR) 215 containing subscriber data, such as the data reflecting the details of the services to which a particular user has subscribed. The HLR is also associated with an authentication center (AuC) that contains subscriber-specific authentication data. When a call is received for a particular UE, the GMSC 214 queries the HLR 215 to determine the UE's location and forwards the call to the particular MSC serving that location.

The core network 204 also supports packet-data services with a serving GPRS support node (SGSN) 218 and a gateway GPRS support node (GGSN) 220. GPRS, which stands for General Packet Radio Service, is designed to provide packet-data services at speeds higher than those available with standard circuit-switched data services. The GGSN 220 provides a connection for the UTRAN 202 to a packet-based network 222. The packet-based network 222 may be the Internet, a private data network, or some other suitable packet-based network. The primary function of the GGSN 220 is to provide the UEs 210 with packet-based network connectivity. Data packets may be transferred between the GGSN 220 and the UEs 210 through the SGSN 218, which performs primarily the same functions in the packet-based domain as the MSC 212 performs in the circuit-switched domain.

The UMTS air interface is a spread spectrum Direct-Sequence Code Division Multiple Access (DS-CDMA) system. The spread spectrum DS-CDMA spreads user data through multiplication by a sequence of pseudorandom bits called chips. The W-CDMA air interface for UMTS is based on such direct sequence spread spectrum technology and additionally calls for a frequency division duplexing (FDD). FDD uses a different carrier frequency for the UL and DL between a Node B 208 and a UE 210. Another air interface for UMTS that utilizes DS-CDMA, and uses time division duplexing, is the TD-SCDMA air interface. Those skilled in the art will recognize that although various examples described herein may refer to a WCDMA air interface, the underlying principles are equally applicable to a TD-SCDMA air interface.

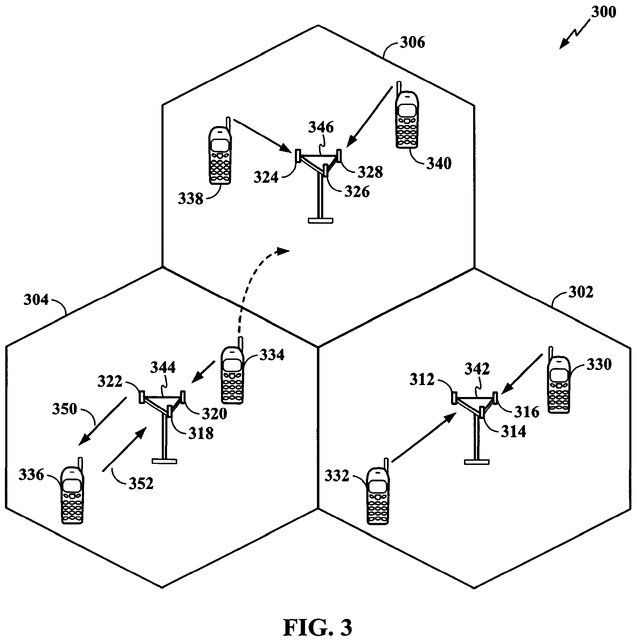

Referring to FIG. 3, an access network 300 in a UTRAN architecture is illustrated. The multiple access wireless communication system includes multiple cellular regions (cells), including cells 302, 304, and 306, each of which may include one or more sectors. Aspects of early decoding and Ack transmission, as described in connection with FIGs. 5-9, including early decoding component 120 of FIG. 1 may be employed in communication between UEs 330, 332, 334, 336, 338, and 340 and cells 302, 304, and 306. For example, UE 336 may receive a packet transmission 350 from transmitter 344. The UE 336 may attempt to early decode the packet transmission 350 prior to receive the entire packet transmission 350. Once the UE 336 has successfully early decoded the packet transmission, the UE 336 may transmit an Ack 352 to the transmitter 344. This enables the transmitter to cease transmission of the packet transmission, thereby providing system capacity gains. Although the example was described for a UE as a receiver, the actions of the UE and cells are interchangeable, and the UE may function as the packet transmitter while the cell attempts to early decode the packet transmission. As transmissions include both control and data packets, control logic may further be applied to determine which transmissions can be stopped and at what time relative to the end of the packet in order to maximize power savings and capacity gains while minimizing unwanted side-effects.

The multiple sectors can be formed by groups of antennas with each antenna responsible for communication with UEs in a portion of the cell. For example, in cell 302, antenna groups 312, 314, and 316 may each correspond to a different sector. In cell 304, antenna groups 318, 320, and 322 each correspond to a different sector. In cell 306, antenna groups 324, 326, and 328 each correspond to a different sector. The cells 302, 304 and 306 may include several wireless communication devices, e.g., User Equipment or UEs, which may be in communication with one or more sectors of each cell 302, 304 or 306. For example, UEs 330 and 332 may be in communication with Node B 342, UEs 334 and 336 may be in communication with Node B 344, and UEs 338 and 340 can be in communication with Node B 346. Here, each Node B 342, 344, 346 is configured to provide an access point to a core network 204 (see FIG. 2) for all the UEs 330, 332, 334, 336, 338, 340 in the respective cells 302, 304, and 306.

As the UE 334 moves from the illustrated location in cell 304 into cell 306, a serving cell change (SCC) or handover may occur in which communication with the UE 334 transitions from the cell 304, which may be referred to as the source cell, to cell 306, which may be referred to as the target cell. Management of the handover procedure may take place at the UE 334, at the Node Bs corresponding to the respective cells, at a radio network controller 206 (see FIG. 2), or at another suitable node in the wireless network. For example, during a call with the source cell 304, or at any other time, the UE 334 may monitor various parameters of the source cell 304 as well as various parameters of neighboring cells such as cells 306 and 302. Further, depending on the quality of these parameters, the UE 334 may maintain communication with one or more of the neighboring cells. During this time, the UE 334 may maintain an Active Set, that is, a list of cells that the UE 334 is simultaneously connected to (i.e., the UTRA cells that are currently assigning a DL dedicated physical channel DPCH or fractional DL dedicated physical channel F-DPCH to the UE 334 may constitute the Active Set).

The modulation and multiple access scheme employed by the access network 300 may vary depending on the particular telecommunications standard being deployed. By way of example, the standard may include Evolution-Data Optimized (EV-DO) or Ultra Mobile Broadband (UMB). EV-DO and UMB are air interface standards promulgated by the 3rd Generation Partnership Project 2 (3GPP2) as part of the CDMA2000 family of standards and employs CDMA to provide broadband Internet access to mobile stations. The standard may alternately be Universal Terrestrial Radio Access (UTRA) employing Wideband-CDMA (W-CDMA) and other variants of CDMA, such as TD-SCDMA; Global System for Mobile Communications (GSM) employing TDMA; and Evolved UTRA (E-UTRA), Ultra Mobile Broadband (UMB), IEEE 802.11 (Wi-Fi), IEEE 802.16 (WiMAX), IEEE 802.20, and Flash-OFDM employing OFDMA. UTRA, E-UTRA, UMTS, LTE, LTE Advanced, and GSM are described in documents from the 3GPP organization. CDMA2000 and UMB are described in documents from the 3GPP2 organization. The actual wireless communication standard and the multiple access technology employed will depend on the specific application and the overall design constraints imposed on the system.

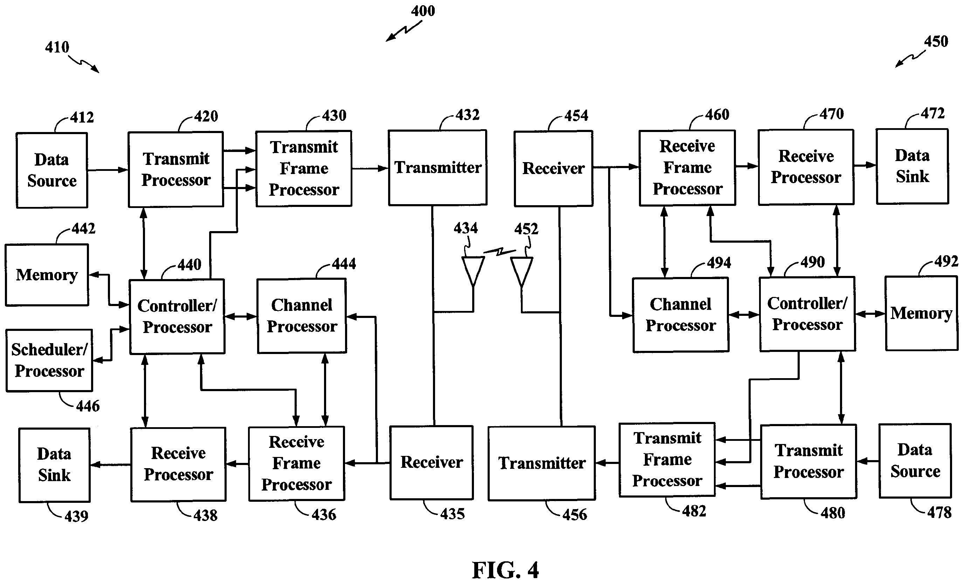

FIG. 4 is a block diagram of a Node B 410 in communication with a UE 450, where the Node B 410 may be the Node B 208 in FIG. 2, and the UE 450 may be the UE 210 in FIG. 2. As described herein, in Node B 410, the Ack transmission function of early decoding component 120 of FIGs. 1 and 2, may include any or the TX Processor 420, the TX Frame Processor, and the controller/processor 440. The Ack reception function of the early decoding component of Node B 410 may include any of the RX Processor 438, the RX Frame Processor, and the controller/processor 440. In UE 450, the Ack transmission function of the early decoding component 120 of FIGs. 1 and 2 may include any of the TX Processor 480, the Transmit Frame Processor 482, and Controller/processor 490. The Ack reception function of the early decoding component 120 in UE 450 may include any of the RX Processor 470, the RX Frame Processor 460, and the controller/processor 490.

In the DL communication, a transmit processor 420 may receive data from a data source 412 and control signals from a controller/processor 440. The transmit processor 420 provides various signal processing functions for the data and control signals, as well as reference signals (e.g., pilot signals). For example, the transmit processor 420 may provide cyclic redundancy check (CRC) codes for error detection, coding and interleaving to facilitate forward error correction (FEC), mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM), and the like), spreading with orthogonal variable spreading factors (OVSF), and multiplying with scrambling codes to produce a series of symbols. Channel estimates from a channel processor 444 may be used by a controller/processor 440 to determine the coding, modulation, spreading, and/or scrambling schemes for the transmit processor 420. These channel estimates may be derived from a reference signal transmitted by the UE 450 or from feedback from the UE 450. The symbols generated by the transmit processor 420 are provided to a transmit frame processor 430 to create a frame structure. The transmit frame processor 430 creates this frame structure by multiplexing the symbols with information from the controller/processor 440, resulting in a series of frames. The frames are then provided to a transmitter 432, which provides various signal conditioning functions including amplifying, filtering, and modulating the frames onto a carrier for DL transmission over the wireless medium through antenna 434. The antenna 434 may include one or more antennas, for example, including beam steering bidirectional adaptive antenna arrays or other similar beam technologies.

At the UE 450, a receiver 454 receives the DL transmission through an antenna 452 and processes the transmission to recover the information modulated onto the carrier. The information recovered by the receiver 454 is provided to a receive frame processor 460, which parses each frame, and provides information from the frames to a channel processor 494 and the data, control, and reference signals to a receive processor 470. The receive processor 470 then performs the inverse of the processing performed by the transmit processor 420 in the Node B 410. More specifically, the receive processor 470 descrambles and despreads the symbols, and then determines the most likely signal constellation points transmitted by the Node B 410 based on the modulation scheme. These soft decisions may be based on channel estimates computed by the channel processor 494. The soft decisions are then decoded and deinterleaved to recover the data, control, and reference signals. The CRC codes are then checked to determine whether the frames were successfully decoded. The data carried by the successfully decoded frames will then be provided to a data sink 472, which represents applications running in the UE 450 and/or various user interfaces (e.g., display). Control signals carried by successfully decoded frames will be provided to a controller/processor 490. When frames are unsuccessfully decoded by the receiver processor 470, the controller/processor 490 may also use an acknowledgement (ACK) and/or negative acknowledgement (NACK) protocol to support retransmission requests for those frames.

In the UL, data from a data source 478 and control signals from the controller/processor 490 are provided to a transmit processor 480. The data source 478 may represent applications running in the UE 450 and various user interfaces (e.g., keyboard). Similar to the functionality described in connection with the DL transmission by the Node B 410, the transmit processor 480 provides various signal processing functions including CRC codes, coding and interleaving to facilitate FEC, mapping to signal constellations, spreading with OVSFs, and scrambling to produce a series of symbols. Channel estimates, derived by the channel processor 494 from a reference signal transmitted by the Node B 410 or from feedback contained in the midamble transmitted by the Node B 410, may be used to select the appropriate coding, modulation, spreading, and/or scrambling schemes. The symbols produced by the transmit processor 480 will be provided to a transmit frame processor 482 to create a frame structure. The transmit frame processor 482 creates this frame structure by multiplexing the symbols with information from the controller/processor 490, resulting in a series of frames. The frames are then provided to a transmitter 456, which provides various signal conditioning functions including amplification, filtering, and modulating the frames onto a carrier for UL transmission over the wireless medium through the antenna 452.

The UL transmission is processed at the Node B 410 in a manner similar to that described in connection with the receiver function at the UE 450. A receiver 435 receives the UL transmission through the antenna 434 and processes the transmission to recover the information modulated onto the carrier. The information recovered by the receiver 435 is provided to a receive frame processor 436, which parses each frame, and provides information from the frames to the channel processor 444 and the data, control, and reference signals to a receive processor 438. The receive processor 438 performs the inverse of the processing performed by the transmit processor 480 in the UE 450. The data and control signals carried by the successfully decoded frames may then be provided to a data sink 439 and the controller/processor, respectively. If some of the frames were unsuccessfully decoded by the receive processor, the controller/processor 440 may also use an acknowledgement (ACK) and/or negative acknowledgement (NACK) protocol to support retransmission requests for those frames.

The controller/processors 440 and 490 may be used to direct the operation at the Node B 410 and the UE 450, respectively. For example, the controller/processors 440 and 490 may provide various functions including timing, peripheral interfaces, voltage regulation, power management, and other control functions. The computer readable media of memories 442 and 492 may store data and software for the Node B 410 and the UE 450, respectively. A scheduler/processor 446 at the Node B 410 may be used to allocate resources to the UEs and schedule DL and/or UL transmissions for the UEs.

Substantial system capacity gains and receiver power consumption reductions can be made possible through the use of early decoding. For example, system capacity gains can be possible when a transmitter is able to stop a packet transmission as soon as it is made aware that the receiver has succeeded in decoding the packet early. Receiver power consumption savings can also be possible because appropriate receiver subsystems can be powered down from the time of successful early decoding until the end of the packet duration.

Transmissions on both uplink and downlink include both control and data packets. Control information on one link can impact the transmission and performance of the other link. Therefore, appropriate control logic is required in order to determine which transmissions can be stopped and at what time relative to the end of the packet, so as to maximize the power savings and capacity gains from early termination while minimizing unwanted side-effects.

R99 packets that are transmitted over time durations, e.g., transmission time intervals (TTIs), of 10ms, 20ms, 40ms or 80ms may be decodable by the receiver prior to reception of the entire packet. Once decoded, an Ack can be sent in order to notify the device transmitting the R99 packet to cease transmission, thereby providing a reduction in transmission power requirements and system capacity gains.

Aspects presented herein can be applied by both the UE and Node B transceivers while involved in early decoding of packets. For example, aspects may be applied by either the UE or Node B in response to reception of Acks of early decoding of packets. The transceiver functions at the two ends of a communications link are indicated as being performed by a UE receiver (UE-Rx), UE transmitter (UE-Tx), Node B receiver (Node B-Rx), and Node B transmitter (Node B-Tx).

When a UE-Rx, for example, receives an Ack from a Node B-Tx that a packet that is currently being transmitted by the UE-Tx has been early decoded by the Node B, the UE-Tx may carry out the following:
(a) Stop transmitting the portion of its usual transmitted waveform that is used by Node B-Rx exclusively to decode the packet which was acknowledged.
(b) Continue to transmit other portions of the transmit waveform that Node B-Rx needs to demodulate for other uses, such as control of Node B-Tx transmissions. This may include, e.g., power-control and Ack/ negative acknowledgement (Nack) for information packets sent by Node B-Tx.
(c) Stop transmission of these residual portions mentioned in (b) once their use ends. For example, once the UE-Rx has decoded a different, e.g., a second, packet that the Node B-Tx has been transmitting to it, the UE-Tx transmits an Ack for this packet. At this point, tight power-control for Node B-Tx transmissions is no longer necessary for the duration of this packet. Therefore, all UE-Tx transmissions of commands used for this power-control can be stopped. Similarly, the Ack/Nack transmission can also be stopped since the packet has already been acknowledged by an Ack.

Although the example was given for a UE that receives an Ack of early decoding from a Node B, these roles are interchangeable. The aspects described above are equally applicable for a Node B-Rx that receives an Ack of early decoding of a packet, transmitted via Node B-Tx, the Ack being received from a UE-Tx.

Aspects to be applied by the receivers and early decoders are readily inferred from the behaviour of the transmitters described *supra.* When the UE is the receiver, the UE-Rx, e.g., must initially try to decode a data packet sent by Node B-Tx, as well as monitor the control information, e.g., power-control and Ack/Nack for UE-Tx transmissions. A data packet decoding module can be powered down in order to save on current consumption from the time the packet is decoded until the end of the packet. The modules decoding the power-control and Ack/Nack information can be powered down as soon as an Ack is received from the Node B-Tx regarding any transmissions sent by the UE to the Node B. This may be, e.g., the earliest point of time at which the various modules can be powered down. However, implementation constraints in practical receivers may make it beneficial to power down at a later time, or in some cases, not power down at all.

The implementation of the above aspects will depend on the encoding/modulation scheme used to transmit the control information, such as power-control and Ack/Nack. For example, the Ack/Nack can be transmitted with on-off keying. Through the use of such on-off keying, "off' transmissions that are sent with zero power represent a Nack until an "on" transmission is sent at a pre-configured power to represent a positive Ack.

With on/off keying, the transmissions both before and after the Ack is sent are identical zero-power transmissions, e.g., discontinuous transmission (DTX). Such zero power transmissions that are received before an Ack are interpreted as a Nack, i.e. as an indication that the packet was not received or has not been decoded. After the Ack has been received until the end of the packet, such zero power transmissions are not interpreted as a Nack, but are ignored, because the Ack has already been received. In another approach, the Ack/Nack signaling can be done using BPSK. In this approach different symbols, and possibly different power levels, can be used to indicate Ack and Nack. In slots where Ack/Nack signaling is disallowed, no signaling is sent. BPSK results in lower power if the probabilities of sending Ack and Nack are not very disparate, e.g., due to restriction of the time-slots in which Ack/Nack signaling is allowed. Additional aspects of such a BPSK approach are described in International Application No. PCT/CN2012/071938 entitled "Ack Channel Design For Early Termination of R99 Downlink Traffic" filed March 5, 2012.

In the context of an R99 uplink, the current specification states that control information, e.g., TPC bits that control downlink power and TFCI, is carried on the DPCCH. The DPCCH also carries pilots to aid demodulation of control and data channels. Uplink data packets are carried on a DPDCH, which uses a different spreading code than DPCCH. In this case, the UE-Tx can stop transmitting the DPDCH transmission as soon as it receives an Ack from the Node-B on the downlink. The DPCCH is no longer required as a phase reference for demodulation of the DPDCH, but is still required to carry control information, and the phase reference is needed to demodulate this control information. The control information carried comprises downlink transmitting power control (DLTPC) bits that control the downlink power, Ack/Nack indication for the downlink packet, and the TFCI indicating the type of packet transmitted on the uplink. The TFCI is no longer needed as the uplink packet has already been acknowledged. The remaining control information can be sent at a reduced rate. Thus, the rate of DPCCH transmissions can be reduced, resulting in reduced interference to other users and to gains in system capacity.

As an example, a UE-Tx may transmit Ack/Nack information using reserved slots in which the DLTPC will be replaced by the Ack, thus reducing the downlink power-control rate. For example, every alternate slot DLTPC can be reserved for Ack/Nack instead of DLTPC. In the slots that have not been reserved, the DPCCH may be transmitted as in the current specification, carrying pilots, DLTPC and TFCI. In the reserved slots however, the pilots are not necessary due to the on-off nature of the Ack/Nack signalling which can be demodulated using an energy detector. The TFCI is also not necessary once the uplink packet has been acknowledged. Thus, a Nack could be sent in these reserved slots by suppressing the DPCCH transmission altogether, resulting in system capacity gains. In order to send an Ack in the reserved slots, the current DPCCH format could be used with DLTPC replaced by Ack, or a new format could be used.

For example, a new slot format can include a format in which only the Ack symbol is present and the other symbols, e.g., pilot and TFCI symbols, are replaced by DTX. Alternatively, a new slot format can use the format of the current specification with TPC replaced by Ack and TFCI either discontinuously transmitted (DTXed), or replaced by a known pilot, or sent as in the current specification, in which case it can still be used as a pilot at the receiver since the receiver has already decoded the TFCI. Once the Ack has been sent, the DPCCH can then be completely DTXed as both the uplink and downlink packets have been decoded.

Additional aspect can be used in order to transmit an Ack, such as those described in "Ack Channel Design for Early Termination of R99 Uplink Traffic" having Attorney Docket No. 121588, and "Ack Channel Design for Early Termination of R99 Downlink Traffic" having Attorney Docket No. 121698.

The above discussed methods may be implemented for example in the UE and/or Node B transceiver as appropriate. Further, the present invention may involve a standards change.

FIG. 5 is a flow chart of a method 500 of wireless communication. The method may be performed by a wireless device that transmits and receives wireless communication, such as a UE or Node B. In an aspect, the device may be an apparatus 702 as described in connection with FIG. 7. At 502, the device begins to transmit a packet, e.g., of wireless communication. The device may transmit the packet of wireless communication to a receiving device such as a Node B or UE, e.g., 750 in FIG. 7 or 802 in FIG. 8. In an aspect, the transmission may be performed by a transmission module, e.g., 708 illustrated in FIG. 7. The packets may comprise R99 packets that are transmitted, e.g., over TTIs of any of 10ms, 20ms, 40ms, and 80ms.

At 504, the device transmits control information. The control information may include, e.g., power control information, such as any of TPC bits, TFCI, and a pilot and Ack/Nack information for transmissions received from receiving device 750. In the context of an R99 uplink, e.g., the control information may include TPC bits that control downlink power and TFCI carried on the DPCCH. The DPCCH may also carry pilots that aid demodulation of control and data channels. The uplink data packets are carried, e.g., on DPDCH, which uses a different spreading code than DPCCH. In an aspect, the transmission of the control information may be performed by a transmission module, e.g., 708 illustrated in FIG. 7.

At 506 the device receives an Ack of early decoding of the packet prior to transmission of the entire packet. The device, e.g., receives the Ack from receiving device such as 750 illustrated in FIG. 7. In an aspect, the acknowledgement may be received via a reception module, e.g., 704 illustrated in FIG. 7. The detection of Acks may be performed by an Ack/Nack detecting module, e.g., 706 illustrated in FIG. 7. This detection may include the determination of whether a received transmission indicates an Ack or a Nack.

At 508, the device ceases transmission of the packet upon receipt of the Ack of early decoding of the packet. Thus, the device may cease transmission of the DPDCH as soon as it receives an Ack from the receiving device, e.g., 750.

Although the data transmission may cease, the device continues to transmit at least a portion of the control information at 510 even after receiving the Ack of early decoding of the packet. Although the packet has been decoded, the receiving device may still need the control information to demodulate for other uses, such as the control of transmissions from the receiving device. For example, the receiving device may still require power control information and other information for Ack/Nack transmissions and other transmissions from the receiving device, e.g., 750.

At 512, the device may optionally cease transmission of a portion of the control information upon receipt of the Ack of early decoding of the packet. Optional aspects in the figures are illustrated using a dashed line. The portion of the control information that is no longer transmitted may comprise a portion that is only required to enable decoding of the packet, because such decoding of the data transmission has already occurred. When the device ceases, e.g., a DPDCH data transmission in response to receiving the Ack, the DPCCH is no longer required as a phase reference for demodulation of the DPDCH, but is still needed to carry control information and the phase reference necessary to demodulate this control information. In the example provided above for an R99 uplink transmission of a data packet, the control information may comprise any of DLTPC bits that control the downlink power, Ack/Nack indications for downlink packets, and TFCI indicating the type of packet transmitted on the uplink. Once early decoding of the packet has been acknowledged, the TFCI is no longer needed because the uplink packet has already been acknowledged.

At 514, the remaining control information may optionally be transmitted at a reduced rate after the Ack of early decoding is received. This enables, e.g., the rate of DPCCH transmissions to be reduced resulting in reduced interference to other users. Such a reduction provides additional gains in system capacity. In an aspect, the reduction may be implemented by a control information module, e.g., 710 illustrated in FIG. 7.

At 516, the device may transmit a second Ack to the receiving device. In an aspect, the transmission can be performed by the transmission module, e.g., 708 illustrated in FIG. 7. This second Ack may be an Ack, e.g., of a packet that the receiving device, e.g., 750, had been transmitting to the device, e.g., 702. Once the second Ack has been sent, the device may cease transmission of the control information at 518. Thus, the residual portions of the control information that continued to be transmitted can be stopped once their use ends. The second Ack may comprise, e.g., an Ack of reception of a second packet transmission, e.g., received from device 750, occurring during the same time interval. This same time interval may be an interval overlapping the interval at which the entire packet would have been transmitted from the device to the receiving device. For example, once the second Ack has been sent, the DPCCH can be completely DTXed because both the uplink and the downlink packets have been decoded. Tight power-control for the receiving device 750 is no longer necessary for the duration of the packet. Therefore, the transmission of commands used for power control can be stopped. Similarly, the Ack/Nack transmission can also be stopped, because the second packet has already been acknowledged by the second Ack.

In one aspect, the second Ack may be transmitted using certain reserved slots in which the DLTPC will be replaced by the second Ack. This reduces the downlink power-control rate. For example, every alternate slot can be reserved for Ack/Nack instead of DLTPC. In the slots that have not been thus reserved, the DPCCH may be transmitted as in the current specification, e.g., carrying pilots, DLTPC and TFCI. In the reserved slots however, the pilots are not necessary due to the on-off nature of the Ack/Nack signalling which can be demodulated using an energy detector. Additionally, the TFCI is also not necessary because the uplink packet has already been acknowledged at 506. Therefore, in one aspect, a Nack could be sent in these reserved slots by suppressing the DPCCH transmission altogether, resulting in system capacity gains. In order to send the second Ack in the reserved slots, the current DPCCH format could be used with DLTPC replaced by the second Ack, or, e.g., a new format could be used.

As a new slot format, only the second Ack symbol may be present and the other symbols, e.g., the pilot and TFCI can be replaced by DTX. Alternatively, a new slot format may involve using the format of the current specification with TPC replaced by the second Ack and having TFCI either DTXed, or replaced by a known pilot, or sent as in the current specification. In this alternative, it can still be used as a pilot at the receiver since the receiver has already decoded the TFCI. Once this second Ack has been sent at 516, the DPCCH can then be completely DTXed at 518 as both the uplink and downlink packets have been decoded.

By applying such control logic to determine which transmissions can be stopped at what point relative to the end of the packet maximizes power savings and system capacity gains by enabling early termination of transmissions while minimizing side effects of such ceased transmissions.

In an aspect, the packet may be a data packet transmitted on an uplink DPDCH, and the control information may be transmitted on an uplink DPCCH. The control information may comprise, e.g., at least one of a pilot, TPC, and TFCI.

In another aspect, the packet may comprise a data packet transmitted on a downlink.

The Ack may be received as a transmission using a number of options. For example, the Ack may be received in a subset of slots, e.g., every alternate slot, that are reserved for Acks. The slots reserved for such Acks may comprise TPC symbols carried on an uplink DPCCH. An Ack and a Nack may be received as transmissions using at least one of on-off keyed symbols and BPSK symbols.

Before an Ack for a packet sent on UL DPDCH is received, the symbols other than the TPC symbols may remain unchanged.

Once an Ack for a packet sent on UL DPDCH is received, the symbols other than the TPC symbols may be received as discontinuous transmissions in order to indicate a Nack.

Once the Ack for the packet sent on UL DPDCH has been received, the symbols other than the TOC symbols in the reserved slots may received as at least one of an unchanged transmission, a discontinuous transmission, and a modified transmission, when an Ack is transmitted.

Once the Ack for the packet sent on UL DPDCH has been received, a pilot symbol may be received as at least one of an unchanged transmission and a discontinuous transmission, when an Ack is transmitted.

Once the Ack for the packet sent on UL DPDCH has been received, a transport format combination indicator may be received as at least one of a discontinuous transmission, an unchanged transmission, and a transmission replaced with a known pilot when an Ack is transmitted.

It is noted that the Ack may also be received as a transmission using other aspects, such as those described in "Ack Channel Design for Early Termination of R99 Uplink Traffic" having Attorney Docket No. 121588, and "Ack Channel Design for Early Termination of R99 Downlink Traffic" having Attorney Docket No. 121698.

Before the Ack is received, the symbols outside of the reserved slots may remain unchanged. Once the Ack has been received, the symbols outside of the reserved slots may be received as discontinuous transmissions in order to indicate a Nack. A transmission indicative of a Nack, e.g., a zero power transmission, that is received before the Ack may be interpreted as a Nack. Thus, the zero power transmissions may be interpreted to mean that the packet was not received or has not been decoded by the receiving device. However, after the receipt of an Ack until the end of the time at which the packet would have been transmitted, zero power transmissions that would normally indicate a Nack can be ignored because the device has already been informed that the packet has been received and decoded.

The roles of a UE and a Node B are interchangeable. The above steps may be taken by either a UE or a Node B that is transmitting a packet. Similarly, the actions of the receivers can be inferred based on the above description regarding the transmitting device.

FIG. 6 is a flow chart of a method 600 of wireless communication. The method is a corresponding method that may be performed by a wireless device that receives packets of wireless communication, such as a UE or Node B. In an aspect, the device may be apparatus 802 as described in connection with FIG. 8 or 750 illustrated in FIG. 7. The device may receive the packets from a transmitting device, e.g., 850 in FIG. 8 or 702 in FIG. 7.

At 602, the device begins to receive a packet transmission, e.g., a data packet from transmitting device 850. In an aspect, the reception is performed by a reception module, e.g., 804 illustrated in FIG. 8.

Once the device begins to receive the packet, the device attempts to early decode the packet prior to receiving the entire packet. In an aspect, the attempt to decode the packet is performed by a decoding module, e.g., 806 illustrated in FIG. 8.

The device also monitors control information, e.g., power control information and Ack/Nacks from the transmitting device, e.g., 850, for any transmissions from the device. The control information is monitored, e.g., at 604. In an aspect, the monitoring of the control information is performed by a control information module, e.g., 810 illustrated in FIG. 8.

Once early decoding has been accomplished at 606, the device transmits an Ack of early decoding at 608. The Ack indicates that the packet has been early decoded prior to reception of the entire packet. In an aspect, the transmission is performed by a transmission module, e.g., 808 illustrated in FIG. 8.

The device can then power down the decoding module, e.g., 806, from the time that the packet is decoded until an end of the packet at 610. The decoding module may comprise e.g., a data packet decoding module.

The device may optionally continue to monitor the control information even after early decoding the packet at 612. The control information may be received at a reduced rate after the Ack of early decoding is transmitted.

At 614, the device may receive a second Ack from the transmitting device that transmitted the packet, e.g., 850. In response to receiving the second Ack, the device may cease to monitor the control information at 616. The device may further power down a control information module at 618 as a part of ceasing to monitor the control information.

The packet may be, e.g., a data packet received on an uplink DPDCH, and the control information may be received on an uplink DPCCH. The control information may include, e.g., at least one of a pilot, TPC, and TFCI. Alternatively, the packet may comprise a data packet transmitted on a downlink, and the Ack may be transmitted in a subset of slots reserved for Acks, e.g., every alternate slot. The slots reserved for Acks may comprise TPC symbols carried on an UL DPCCH, and Acks/Nacks can be transmitted using at least one of on-off keyed symbols and BPSK symbols.

Before an Ack is transmitted on the downlink for packets received on an uplink DPCCH, the symbols other than the TPC symbols may be unchanged.

After the Ack has been transmitted on the downlink for packets received on an uplink DPCCH, the symbols other than the TPC symbols may be discontinuously transmitted to transmit a Nack.

After the Ack has been transmitted on the downlink for packets received on an uplink DPCCH, the other than the TPC symbols in the reserved slots may be transmitted using at least one of an unchanged transmission, a discontinuous transmission, and a modified transmission.

After the Ack has been transmitted on the downlink for packets received on an uplink DPCCH, a pilot symbol may be transmitted as at least one of an unchanged transmission and a discontinuous transmission.

After the Ack has been transmitted on the downlink for packets received on an uplink DPCCH, a transport format combination indicator may be transmitted as at least one of a discontinuous transmission and a transmission replaced with a known pilot.

These aspects indicate the earliest time at which various modules, such as the decoding module and the control information module, can be powered down. Implementation constraints in receivers may make it beneficial to power down at a later time, or in some cases, not to power down these modules at all.

FIG. 7 is a conceptual data flow diagram 700 illustrating the data flow between different modules/means/components in an exemplary apparatus 702. The apparatus may be a device that receives wireless communication of packets, as described in connection with aspects of FIG. 5. The device may be, e.g., a UE or a Node B. The apparatus 702 includes a transmission module 708 that transmits a packet transmission and control information to a receiving device 750. The receiving device 750 is a device that receives packets of wireless communication, e.g., a UE or a Node B. The receiving device 750 may be, e.g., apparatus 802 illustrated in FIG. 8. The device includes a reception module 704 that receives an Ack of early decoding from receiving device 750. The apparatus 702 can optionally include an Ack/Nack detecting module 706 that detects the Ack received from the receiving device 750. The device may also include a control information module 710 that controls the control information that is transmitted. The apparatus 702 may begin to transmit a packet and control information by transmission module 708. Once an Ack of early decoding is received by reception module 704, the transmission module ceases transmission of the packet yet continues to transmit at least a portion of the control information. The transmission module may cease to transmit a portion of the control information, e.g., that portion that is only necessary to assist decoding of the data packet, upon receipt of the Ack of early decoding. The determination of the portion of control information to be transmitted may be determined, e.g., by control information module 710. The control information may also determine the rate at which the portion of control information continues to be sent. The apparatus 702 may transmit, via transmission module 708, a second Ack, e.g., regarding a transmission received from receiving device 750. Upon the transmission of the second Ack, the apparatus 702 may cease transmission of the control information by transmission module 708.

The apparatus may include additional modules that perform each of the steps of the algorithm in the aforementioned flow charts of FIG. 5. As such, each step in the aforementioned flow charts of FIG. 5 may be performed by a module and the apparatus may include one or more of those modules. The modules may be one or more hardware components specifically configured to carry out the stated processes/algorithm, implemented by a processor configured to perform the stated processes/algorithm, stored within a computer-readable medium for implementation by a processor, or some combination thereof.

FIG. 8 is a conceptual data flow diagram 800 illustrating the data flow between different modules/means/components in an exemplary apparatus 802. The apparatus 802 may be a device that receives wireless communication, as described in connection with aspects of FIG. 6. The apparatus 802 may be, e.g., a UE or a Node B. The apparatus 802 includes a reception module 804 that receives wireless communication, e.g., data packets and control information, from a transmitting device 850. The transmitting device 850 is a device that transmits the packets and control information as wireless communication, e.g., a UE or a Node B. The transmitting device 850 may be similar to apparatus 702 described in connection with FIG. 8.

The apparatus 802 includes a control information module 810 that monitors control information received from transmitting device 850. The apparatus 802 includes a decoding module 806 that attempts to early decode the packet prior to receiving the entire packet.

The apparatus 802 also includes a transmission module 808 that transmits an Ack of early decoding once early decoding has been accomplished. After the Ack is transmitted, the decoding module 806 can be powered down until the end of the packet, because the packet has already been decoded.

Even though early decoding of the packet has occurred and acknowledged, the transmitting device 850 may need to continue transmitting certain control information. Therefore, the apparatus 802 may continue to receive control information via reception module 804 and to monitor the control information via control information module 810. The reception module 804 may thereafter receive a second Ack from transmitting device 850. The second Ack may be an Ack regarding a packet transmitted by apparatus 802. Such a packet may have been transmitted by transmission module 808. After the second Ack is received, the apparatus 802 may cease to monitor control information and may power down the control information module 810.

The apparatus may include additional modules that perform each of the steps of the algorithm in the aforementioned flow charts of FIG. 6. As such, each step in the aforementioned flow charts of FIG. 6 may be performed by a module and the apparatus may include one or more of those modules. The modules may be one or more hardware components specifically configured to carry out the stated processes/algorithm, implemented by a processor configured to perform the stated processes/algorithm, stored within a computer-readable medium for implementation by a processor, or some combination thereof.

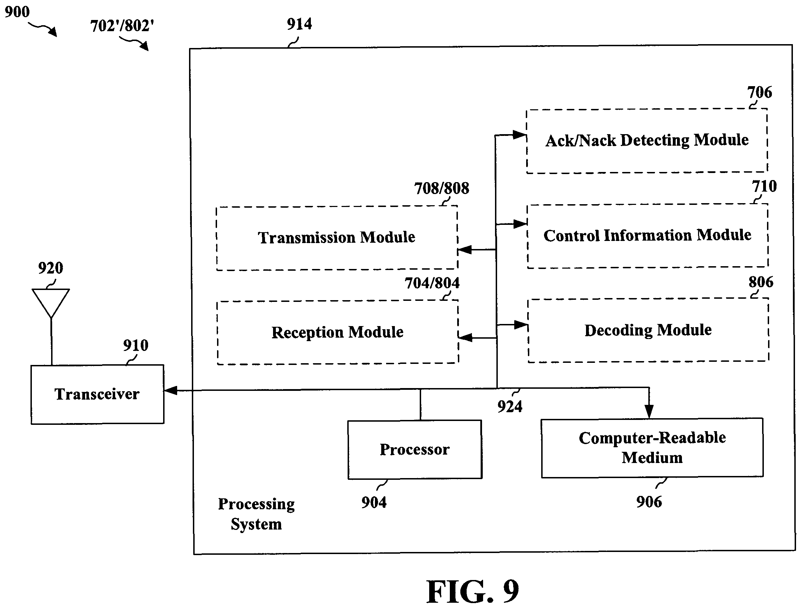

Aspects may be included interchangeably in either a UE or a Node B. Additionally, as illustrated in FIG. 9, a single apparatus may include both the modules for the reception functions of early decoding and the transmission functions related to early decoding, e.g., a single apparatus may include the modules to perform early decoding and to send Acks of early decoding as well as to receive such Acks and respond accordingly.

FIG. 9 is a diagram 900 illustrating an example of a hardware implementation for an apparatus 702'/802' employing a processing system 914. The processing system 914 may be implemented with a bus architecture, represented generally by the bus 924. The bus 924 may include any number of interconnecting buses and bridges depending on the specific application of the processing system 914 and the overall design constraints. The bus 924 links together various circuits including one or more processors and/or hardware modules, represented by the processor 904, any of the modules 704, 706, 708, 710, 804, 806, 808, and 810 and the computer-readable medium 906. The bus 924 may also link various other circuits such as timing sources, peripherals, voltage regulators, and power management circuits, which are well known in the art, and therefore, will not be described any further.

The processing system 914 may be coupled to a transceiver 910. The transceiver 910 is coupled to one or more antennas 920. The transceiver 910 provides a means for communicating with various other apparatus over a transmission medium. The processing system 914 includes a processor 904 coupled to a computer-readable medium 906. The processor 904 is responsible for general processing, including the execution of software stored on the computer-readable medium 906. The software, when executed by the processor 904, causes the processing system 914 to perform the various functions described *supra* for any particular apparatus. The computer-readable medium 906 may also be used for storing data that is manipulated by the processor 904 when executing software. The processing system further includes at least one of the modules 704, 706, 708, 710, 804, 806, 808, and 810. The modules may be software modules running in the processor 904, resident/stored in the computer readable medium 906, one or more hardware modules coupled to the processor 904, or some combination thereof. When apparatus 702' or 802' is a Node B, the processing system 914 may be a component of the Node B 410 and may include the memory 442 and/or at least one of the TX processor 420, the RX processor 438, and the controller/processor 440. When apparatus 702' or 802' is a UE, the processing system 914 may be a component of the UE 450 and may include the memory 492 and/or at least one of the TX processor 480, the RX processor 470, and the controller/processor 490.

The various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Additionally, at least one processor may comprise one or more modules operable to perform one or more of the steps and/or actions described above.

Further, the steps and/or actions of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal. Additionally, in some aspects, the steps and/or actions of a method or algorithm may reside as one or any combination or set of codes and/or instructions on a machine readable medium and/or computer readable medium, which may be incorporated into a computer program product.

In one or more aspects, the functions described may be implemented in hardware, software, firmware, or any combination thereof. If implemented in software, the functions may be stored or transmitted as one or more instructions or code on a computer-readable medium. Computer-readable media includes both computer storage media and communication media including any medium that facilitates transfer of a computer program from one place to another. A storage medium may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection may be termed a computer-readable medium. For example, if software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs usually reproduce data optically with lasers. Combinations of the above should also be included within the scope of computer-readable media.

Several aspects of a telecommunications system have been presented with reference to a W-CDMA system. As those skilled in the art will readily appreciate, various aspects described throughout this disclosure may be extended to other telecommunication systems, network architectures and communication standards.

By way of example, various aspects may be extended to other UMTS systems such as TD-SCDMA, High Speed Downlink Packet Access (HSDPA), High Speed Uplink Packet Access (HSUPA), High Speed Packet Access Plus (HSPA+) and TD-CDMA. Various aspects may also be extended to systems employing Long Term Evolution (LTE) (in FDD, TDD, or both modes), LTE-Advanced (LTE-A) (in FDD, TDD, or both modes), CDMA2000, Evolution-Data Optimized (EV-DO), Ultra Mobile Broadband (UMB), IEEE 802.11 (Wi-Fi), IEEE 802.16 (WiMAX), IEEE 802.20, Ultra-Wideband (UWB), Bluetooth, and/or other suitable systems. The actual telecommunication standard, network architecture, and/or communication standard employed will depend on the specific application and the overall design constraints imposed on the system.

It is to be understood that the specific order or hierarchy of steps in the methods disclosed is an illustration of exemplary processes. Based upon design preferences, it is understood that the specific order or hierarchy of steps in the methods may be rearranged. The accompanying method claims present elements of the various steps in a sample order, and are not meant to be limited to the specific order or hierarchy presented unless specifically recited therein.

The previous description is provided to enable any person skilled in the art to practice the various aspects described herein. Various modifications to these aspects will be readily apparent to those skilled in the art, and the generic principles defined herein may be applied to other aspects. The scope of protection is defined by the appended claims.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated.

## Claims

1. A method (500) of wireless communication comprising:
beginning (502) to transmit a packet to a receiving device;
transmitting (504) control information to the receiving device that is required for receiving a transmission back from the receiving device, the control information comprising at least one of a pilot, a transmitting power control, TPC, and a transport format combination indicator, TFCI;
receiving (506) an acknowledgement, Ack, of early decoding of the packet prior to transmission of the entire packet;
ceasing (508) transmission of the packet upon receipt of the Ack of early decoding of the packet;
continuing (510) to transmit at least a portion of the control information;
receiving a packet from the receiving device during a same time interval in which the transmitted packet began to be transmitted;
transmitting (516) a second Ack for the received packet and thereupon ceasing (518) transmission of the control information.

2. The method of claim 1, wherein the control information is transmitted at a reduced rate after the Ack of early decoding is received.

3. The method of claim 1, wherein the packet comprises a data packet transmitted on a downlink, and wherein the Ack is received in a subset of slots reserved for Acks, wherein the subset comprises every alternate slot.

4. The method of claim 3, wherein the slots reserved for Acks comprise transmitting power control, TPC, symbols carried on an uplink dedicated physical control channel, DPCCH, and wherein an Ack and a negative Ack, Nack, are received as transmissions using at least one of on-off keyed symbols and binary phase-shift keyed symbols.

5. The method of claim 4, wherein before an Ack for a packet sent on UL DPDCH is received, the symbols other than the TPC symbols are unchanged.

6. An apparatus (702), comprising:
means (708) for beginning to transmit a packet to a receiving device;
means (708) for transmitting control information to the receiving device that is required for receiving a transmission back from the receiving device, the control information comprising at least one of a pilot, a transmitting power control, TPC, and a transport format combination indicator, TFCI;
means (704) for receiving an acknowledgement, Ack, of early decoding of the packet prior to transmission of the entire packet;
means for ceasing transmission of the packet upon receipt of the Ack of early decoding of the packet;
means for continuing to transmit at least a portion of the control information;
means for receiving a packet from the receiving device during a same time interval in which the transmitted packet began to be transmitted;
means for transmitting a second Ack for the received packet and thereupon ceasing (518) transmission of the control information.

7. A method (600) of wireless communication comprising:
beginning (602) to receive a packet transmission from a transmitting device;
monitoring (604) control information from the transmitting device that is required for transmitting a transmission back to the transmitting device, the control information comprising at least one of a pilot, a transmitting power control, TPC, and a transport format combination indicator, TFCI;
early decoding (606), via a decoding module, the packet prior to receiving the entire packet;
transmitting (608) an acknowledgement, Ack, of early decoding;
powering down (610) the decoding module from the time that the packet is decoded until an end of the packet;
continuing to monitor at least a portion of the control information from the transmitting device;
transmitting a packet to the transmitting device during a same time interval in which the received packet began to be received; and
receiving a second Ack for the transmitted packet and thereupon ceasing monitoring of the control information.

8. The method of claim 7, further comprising:
powering down a control information module, wherein the control information is received at a reduced rate after the Ack of early decoding is transmitted.

9. The method of claim 8, wherein the packet comprises a data packet transmitted on a downlink, and wherein the Ack is transmitted in a subset of slots reserved for Acks, and wherein the subset comprises every alternate slot.

10. The method of claim 9, wherein the slots reserved for Acks comprise transmitting power control, TPC, symbols carried on an uplink dedicated physical control channel, DPCCH, and wherein the Ack and a negative Ack, Nack are transmitted using at least one of on-off keyed symbols and binary phase-shift keyed symbols.

11. The method of claim 10, wherein before an Ack is transmitted on the downlink for packets received on an uplink DPCCH, the symbols other than the TPC symbols are unchanged.

12. An apparatus (800), comprising:
means (804)for beginning to receive a packet transmission from a transmitting device;
means (810) for monitoring control information from the transmitting device that is required for transmitting a transmission back to the transmitting device, the control information comprising at least one of a pilot, a transmitting power control, TPC, and a transport format combination indicator, TFCI;
means (806) for early decoding, via a decoding module, the packet prior to receiving the entire packet;
means (808) for transmitting an acknowledgement, Ack, of early decoding;
means for powering down the decoding module from the time that the packet is decoded until an end of the packet;
means for continuing to monitor at least a portion of the control information from the transmitting device;
means for transmitting a packet to the transmitting device during a same time interval in which the received packet began to be received; and
means for receiving a second Ack for the transmitted packet and thereupon ceasing monitoring of the control information.

13. A computer program product comprising instructions which, when the program is executed by a computer, cause the computer to carry out method according to any of claims 1-5 ; or 7 to 11.

## Patentansprüche

1. Ein Verfahren (500) für Drahtloskommunikation, das Folgendes aufweist:
Beginnen (502) ein Paket an eine empfangende Einrichtung zu senden;
Senden (504) von Steuerinformation an die empfangende Einrichtung, die zum Empfangen einer Sendung zurück von der empfangenden Einrichtung erforderlich ist, wobei die Steuerinformation wenigstens eines von einem Pilot, einer Sendeleistungssteuerung bzw. TPC (TPC = transmitting power control) und einem Transportformatkombinationsindikator bzw. TFCI (TFCI = transport format combination indicator) aufweist;
Empfangen (506) einer Bestätigung bzw. eines Ack (Ack = acknowledgement) einer frühen Decodierung des Pakets, vor einer Sendung des gesamten Pakets;
Beenden (508) der Sendung des Pakets auf einen Empfang des Ack einer frühen Decodierung des Pakets hin;
Fortfahren (510) wenigstens einen Teil der Steuerinformation zu senden;
Empfangen eines Pakets von der empfangenden Einrichtung während eines gleichen Zeitintervalls, in dem das gesendete Paket begonnen wurde gesendet zu werden;
Senden (516) eines zweiten Ack für das empfangene Paket und daraufhin Beenden (518) der Sendung der Steuerinformation.

2. Verfahren nach Anspruch 1, wobei die Steuerinformation mit einer reduzierten Rate gesendet wird, nachdem das Ack der frühen Decodierung empfangen worden ist.

3. Verfahren nach Anspruch 1, wobei das Paket ein Datenpaket aufweist, das auf einem Downlink bzw. einer Abwärtsstrecke gesendet wird, und wobei das Ack in einem Subsatz von Schlitzen, die für Acks reserviert sind, empfangen wird, wobei der Subsatz jeden zweiten Schlitz aufweist.

4. Verfahren nach Anspruch 3, wobei die Schlitze, die für Acks reserviert sind, Sendeleistungssteuerungs- bzw. TPC-Symbole aufweisen, die auf einem Uplink- bzw. Aufwärtsstrecken-DPCCH (DPCCH = dedicated physical control channel bzw. dedizierter physischer Steuerkanal) getragen werden, und wobei ein Ack und negatives Ack bzw. Nack als Sendungen empfangen werden, und zwar unter Verwendung wenigstens eines von On-Off-Keyed-Symbolen bzw. An-Aus-getasteten Symbolen und binärphasenumgetasteten Symbolen bzw. BPSK-Symbolen (BPSK = binary phase-shift keyed).

5. Verfahren nach Anspruch 4, wobei, bevor ein Ack für ein Paket, das auf einem UL DPDCH gesendet wird, empfangen wird, die anderen Symbole als die TPC-Symbole unverändert sind.

6. Eine Vorrichtung (702), die Folgendes aufweist:
Mittel (708) zum Beginnen ein Paket an eine empfangende Einrichtung zu senden;
Mittel (708) zum Senden von Steuerinformation an die empfangende Einrichtung, die zum Empfangen einer Sendung zurück von der empfangenden Einrichtung erforderlich ist, wobei die Steuerinformation wenigstens eines von einem Pilot, einer Sendeleistungssteuerung bzw. TPC (TPC = transmitting power control) und einem Transportformatkombinationsindikator bzw. TFCI (TFCI = transport format combination indicator) aufweist;
Mittel (704) zum Empfangen einer Bestätigung bzw. eines Ack (Ack = acknowledgement) einer frühen Decodierung des Pakets, vor einer Sendung des gesamten Pakets;
Mittel zum Beenden der Sendung des Pakets auf einen Empfang des Ack einer frühen Decodierung des Pakets hin;
Mittel zum Fortfahren wenigstens einen Teil der Steuerinformation zu senden;
Mittel zum Empfangen eines Pakets von der empfangenden Einrichtung während eines gleichen Zeitintervalls, in dem das gesendete Paket begonnen wurde gesendet zu werden;
Mittel zum Senden eines zweiten Ack für das empfangene Paket und daraufhin Beenden (518) der Sendung der Steuerinformation.

7. Ein Verfahren (600) für Drahtloskommunikation, das Folgendes aufweist:
Beginnen (602) eine Paketsendung von einer sendenden Einrichtung zu empfangen;
Überwachen (604) von Steuerinformation von der sendenden Einrichtung, die zum Senden einer Sendung zurück an die sendende Einrichtung erforderlich ist, wobei die Steuerinformation wenigstens eines von einem Pilot, einer Sendeleistungssteuerung bzw. TPC (TPC = transmitting power control) und einem Transportformatkombinationsindikator bzw. TFCI (TFCI = transport format combination indicator) aufweist;
frühes Decodieren (606), über einen Decodiermodul, des Pakets vor Empfangen des gesamten Pakets;
Senden (608) einer Bestätigung bzw. eines Ack (Ack = acknowledgement) einer frühen Decodierung;
Herunterfahren (610) des Decodiermoduls ab der Zeit, zu der das Paket decodiert ist, bis zu einem Ende des Pakets;
Fortfahren wenigstens einen Teil der Steuerinformation von der sendenden Einrichtung zu überwachen;
Senden eines Pakets an die sendende Einrichtung während eines gleichen Zeitintervalls, in dem das empfangene Paket begonnen wurde empfangen zu werden; und
Empfangen eines zweiten Ack für das gesendete Paket und daraufhin Beenden des Überwachens der Steuerinformation.

8. Verfahren nach Anspruch 7, das weiter Folgendes aufweist:
Herunterfahren bzw. Abschalten eines Steuerinformationsmoduls, wobei die Steuerinformation mit einer reduzierten Rate empfangen wird, nachdem das Ack der frühen Decodierung gesendet worden ist.

9. Verfahren nach Anspruch 8, wobei das Paket ein Datenpaket aufweist, das auf einem Downlink bzw. einer Abwärtsstrecke gesendet worden ist, und wobei das Ack in einem Subsatz von Schlitzen gesendet wird, der für Acks reserviert ist, und wobei der Subsatz jeden zweiten Schlitz aufweist.

10. Verfahren nach Anspruch 9, wobei die Schlitze, die für Acks reserviert sind, Sendeleistungssteuerungs- bzw. TPC-Symbole aufweisen, die auf einem Uplink- bzw. Aufwärtsstrecken-DPCCH (DPCCH = dedicated physical control channel bzw. dedizierter physischer Steuerkanal) getragen werden, und wobei ein Ack und negatives Ack bzw. Nack gesendet werden, und zwar unter Verwendung wenigstens eines von An-Aus-getasteten Symbolen bzw. On-Off-Keyed-Symbolen und binärphasenumgetasteten Symbolen bzw. BPSK-Symbolen (BPSK = binary phase-shift keyed).

11. Verfahren nach Anspruch 10, wobei, bevor ein Ack auf der Abwärtsstrecke für Pakete gesendet wird, die auf einem UL DPDCH empfangen werden, die anderen Symbole als die TPC-Symbole unverändert sind.

12. Eine Vorrichtung (800), die Folgendes aufweist:
Mittel (804) zum Beginnen eine Paketsendung von einer sendenden Einrichtung zu empfangen;
Mittel (810) zum Überwachen von Steuerinformation von der sendenden Einrichtung, die zum Senden einer Sendung zurück an die sendende Einrichtung erforderlich ist, wobei die Steuerinformation wenigstens eines von einem Pilot, einer Sendeleistungssteuerung bzw. TPC (TPC = transmitting power control) und einem Transportformatkombinationsindikator bzw. TFCI (TFCI = transport format combination indicator) aufweist;
Mittel (806) zum frühen Decodieren, über ein Decodiermodul, des Pakets vor Empfangen des gesamten Pakets;
Mittel (808) zum Senden einer Bestätigung bzw. eines Ack (Ack = acknowledgement) einer frühen Decodierung;
Mittel zum Herunterfahren des Decodiermoduls ab der Zeit, zu der das Paket decodiert ist, bis zu einem Ende des Pakets;
Mittel zum Fortfahren wenigstens einen Teil der Steuerinformation von der sendenden Einrichtung zu überwachen;
Mittel zum Senden eines Pakets an die sendende Einrichtung während eines gleichen Zeitintervalls, in dem das empfangene Paket begonnen wurde empfangen zu werden; und
Mittel zum Empfangen eines zweiten Ack für das gesendete Paket und daraufhin Beenden des Überwachens der Steuerinformation.

13. Ein Computerprogrammprodukt, das Instruktionen aufweist, die, wenn das Programm durch einen Computer ausgeführt wird, den Computer veranlassen zum Durchführen eines Verfahrens nach einem der Ansprüche 1-5 oder 7 bis 11.

## Revendications

1. Procédé (500) de communication sans fil comprenant :
un démarrage (502) d'une transmission d'un paquet vers un dispositif de réception ;
une transmission (504) d'informations de commande vers le dispositif de réception qui sont requises pour une réception d'une transmission en retour depuis le dispositif de réception, les informations de commande comprenant au moins un élément parmi un pilote, une commande de puissance de transmission, TPC, et un indicateur de combinaison de format de transport, TFCI ;
une réception (506) d'un accusé de réception, Ack, d'un décodage anticipé du paquet avant une transmission de la totalité du paquet ;
un arrêt (508) d'une transmission du paquet à réception de l'Ack de décodage anticipé du paquet ;
une poursuite (510) de la transmission d'au moins une partie des informations de commande ;
une réception d'un paquet à partir du dispositif de réception pendant un même intervalle de temps au cours duquel le paquet transmis a commencé à être transmis ;
une transmission (516) d'un second Ack pour le paquet reçu puis un arrêt (518) de la transmission des informations de commande.

2. Procédé selon la revendication 1, dans lequel les informations de commande sont transmises à un débit réduit après une réception de l'Ack de décodage anticipé.

3. Procédé selon la revendication 1, dans lequel le paquet comprend un paquet de données transmis sur une liaison descendante, et dans lequel l'Ack est reçu dans un sous-ensemble de créneaux réservés pour des Ack, dans lequel le sous-ensemble comprend chaque créneau alternatif.

4. Procédé selon la revendication 3, dans lequel les créneaux réservés pour des Ack comprennent des symboles de commande de puissance de transmission, TPC, portés sur un canal de commande physique dédié, DPCCH, de liaison montante et dans lequel un Ack et un Ack négatif, Nack, sont reçus sous la forme de transmissions à l'aide d'au moins un de symboles modulés par tout ou rien et de symboles modulés par déplacement de phase binaire.

5. Procédé selon la revendication 4, dans lequel avant une réception d'un Ack pour un paquet envoyé sur un DPDCH UL, les symboles autres que les symboles TPC sont inchangés.

6. Appareil (702), comprenant :
un moyen (708) de démarrage d'une transmission d'un paquet vers un dispositif de réception ;
un moyen (708) de transmission d'informations de commande vers le dispositif de réception qui sont requises pour une réception d'une transmission en retour depuis le dispositif de réception, les informations de commande comprenant au moins un élément parmi un pilote, une commande de puissance de transmission, TPC, et un indicateur de combinaison de format de transport, TFCI ;
un moyen (704) de réception d'un accusé de réception, Ack, d'un décodage anticipé du paquet avant une transmission de la totalité du paquet ;
un moyen d'arrêt d'une transmission du paquet à réception de l'Ack de décodage anticipé du paquet ;
un moyen de poursuite de la transmission d'au moins une partie des informations de commande ;
un moyen de réception d'un paquet à partir du dispositif de réception pendant un même intervalle de temps au cours duquel le paquet transmis a commencé à être transmis ;
un moyen de transmission d'un second Ack pour le paquet reçu puis un arrêt (518) de la transmission des informations de commande.

7. Procédé (600) de communication sans fil comprenant :
un démarrage (602) d'une réception d'une transmission d'un paquet à partir d'un dispositif de transmission ;
un suivi (604) d'informations de commande à partir du dispositif de transmission qui sont requises pour une transmission d'une transmission en retour au dispositif de transmission, les informations de commande comprenant au moins un élément parmi un pilote, une commande de puissance de transmission, TPC, et un indicateur de combinaison de format de transport, TFCI ;
un décodage anticipé (606), par l'intermédiaire d'un module de décodage, du paquet avant une réception de la totalité du paquet ;
une transmission (608) d'un accusé de réception, Ack, d'un décodage anticipé ;
une mise hors tension (610) du module de décodage à partir du moment où le paquet est décodé jusqu'à une fin du paquet ;
une poursuite du suivi d'au moins une partie des informations de commande à partir du dispositif de transmission ;
une transmission d'un paquet au dispositif de transmission pendant un même intervalle de temps au cours duquel le paquet reçu a commencé à être reçu ; et
une réception d'un second Ack pour le paquet transmis puis un arrêt d'un suivi des informations de commande.

8. Procédé selon la revendication 7, comprenant en outre :
une mise hors tension d'un module d'informations de commande, dans lequel les informations de commande sont reçues à un débit réduit après une transmission de l'Ack de décodage anticipé.

9. Procédé selon la revendication 8, dans lequel le paquet comprend un paquet de données transmis sur une liaison descendante, et dans lequel l'Ack est transmis dans un sous-ensemble de créneaux réservés pour des Ack, et dans lequel le sous-ensemble comprend chaque créneau alternatif.

10. Procédé selon la revendication 9, dans lequel les créneaux réservés pour des Ack comprennent symboles de commande de puissance de transmission, TPC, portés sur un canal de commande physique dédié, DPCCH, de liaison montante et dans lequel l'Ack et un Ack négatif, Nack, sont transmis à l'aide d'au moins un de symboles modulés par tout ou rien et de symboles modulés par déplacement de phase binaire.

11. Procédé selon la revendication 10, dans lequel avant une transmission d'un Ack sur la liaison descendante pour des paquets reçus sur un DPCCH de liaison montante, les symboles autres que les symboles TPC sont inchangés.

12. Appareil (800), comprenant :
un moyen (804) de démarrage d'une réception d'une transmission d'un paquet à partir d'un dispositif de transmission ;
un moyen (810) de suivi d'informations de commande à partir du dispositif de transmission qui sont requises pour une transmission d'une transmission en retour au dispositif de transmission, les informations de commande comprenant au moins un élément parmi un pilote, une commande de puissance de transmission, TPC, et un indicateur de combinaison de format de transport, TFCI ;
un moyen (806) de décodage anticipé, par l'intermédiaire d'un module de décodage, du paquet avant une réception de la totalité du paquet ;
un moyen (808) de transmission d'un accusé de réception, Ack, d'un décodage anticipé ;
un moyen de mise hors tension du module de décodage à partir du moment où le paquet est décodé jusqu'à une fin du paquet ;
un moyen de poursuite du suivi d'au moins une partie des informations de commande à partir du dispositif de transmission ;
un moyen de transmission d'un paquet au dispositif de transmission pendant un même intervalle de temps au cours duquel le paquet reçu a commencé à être reçu ; et
un moyen de réception d'un second Ack pour le paquet transmis puis un arrêt d'un suivi des informations de commande.

13. Produit de programme informatique comprenant des instructions qui, lorsque le programme est exécuté par un ordinateur, amènent l'ordinateur à réaliser un procédé selon l'une quelconque des revendications 1 à 5 ou 7 à 11.
